# EUROPEAN PATENT SPECIFICATION

(11) **EP 3 645 984 B1**
(45) Date of publication and mention of the grant of the patent: **29.06.2022**
(21) Application number: 18823774.7
(22) Date of filing: 13.06.2018
(51) Int. Cl.: G01G 3/12, B65F 3/00, G01G 19/12, G01L 1/14

(54) **A WEIGHING DEVICE**
WIEGEVORRICHTUNG
DISPOSITIF DE PESAGE

(30) Priority: 27.06.2017 SE 1750821
(43) Date of publication of application: 06.05.2020
(73) Proprietor: Daprox Ab, 141 75 Kungens Kurva (SE)
(72) Inventor: ÅKERBLOM, Bengt, 143 40 Vårby (SE); HEMLÉN, Mikael, 141 74 Segeltorp (SE)
(74) Representative: Zacco Sweden AB
(86) International application number: PCT/SE2018/050613
(87) International publication number: WO 2019/004898

(56) References cited:
- EP-A2- 0 322 193
- EP-A2- 1 288 636
- GB-A- 2 350 688
- US-A- 3 371 526
- US-A- 4 438 823
- US-A- 4 750 082
- US-A- 5 119 894
- US-A- 5 837 945
- US-A1- 2003 000 746
- US-A1- 2004 089 068
- US-A1- 2004 149 050
- US-A1- 2004 149 050
- US-A1- 2006 161 386

## Description

### TECHNICAL FIELD

The present invention relates to a weighing device.

The present invention concerns the industry providing and/or producing weighing devices for the weighing of e.g. refuse bins or other objects to be weighed. It may also concern weighing devices configured to be mounted on trucks, lorries, refuse collection vehicles etc. It may also concern the vehicle producer per se.

### BACKGROUND

There is a desire to provide an efficient, robust and accurate weighing device.

There is a desire to develop current weighing devices, which exist in the technical field.

Current technology as published uses weighing devices that are designed with specific technical features for weighing an object, but they still involve inaccuracy and are not regarded as robust when taking into account the rough environment that they are exposed to.

### SUMMARY OF THE INVENTION

Prior art disclosed in WO 93/17308 reveals a load cell for mobile weighing of an article. The load cell comprises strain gauges. US 20040149050A1 describes a load cell with a force transducer for recording weight and with a deformable part defining a spacing which changes under loading. An inductively operating transducer is arranged at the spacing for detecting changes in the spacing as an electrical signal. The inductively operating transducer operates on the principle of inductance change due to the change in electrical inductance. The electronic sensor operates on the eddy current principle and has a ferrit open core and sensor coil open for passing through of magnetic fields for measuring change in inductance.

Other load cells are also used for weighing of an article, especially a refuse bin, wherein the load cell uses electrical strain gauges for measuring the weight of the article. In most cases the orientation of each electrical strain gauge is significant and the electrical strain gauges are attached to the substrate with a specific type of glue. However, there may be a problem with buckling and breaking the electrical strain gauge, especially as refuse bin weighing to a refuse collection vehicle or lorry often being vulnerable to rough environment and handling.

An object of the present invention is to provide a weighing device with reliability and accuracy in functionality and cost-effective production and operation.

This has in different embodiments been achieved by means of a weighing device having a first portion configured to be mounted on a platform and having a second portion configured to be coupled to an object to be weighed, which object is affected by gravity in a first direction during use of the weighing device, the weighing device comprises; a first section extending from the first portion to the second portion in a second direction; a second section extending from the first portion to a free end; an inductive distance measuring sensor comprising a magnetically conductive core having a first end surface; the inductive distance measuring sensor is mounted to the first section, wherein the first end surface of the magnetically conductive core faces a second section plane of the second section, or is mounted to the second section, wherein the first end surface of the magnetically conductive core faces a first section plane of the first section; the first section being flexible and the second section being rigid; a gap is provided between the first end surface of the magnetically conductive core and the second section plane or between the first end surface of the magnetically conductive core and the first section plane; the gap exhibits a width which is variable in said first direction and which corresponds with a distance to be measured by the inductive distance measuring sensor.

Suitably, a converting unit is coupled to the inductive distance measuring sensor and is configured to convert the measured distance to mass and weight of the object to be weighed.

Thereby is achieved a robust and exact weighing device due to the fact that the flux paths emanating from the magnetically conductive core is stable and unaffected by rough handling and harsh environment. Independent claim 1 specifies, according to the invention, that the inductive distance measuring sensor measures the reluctance by means of DC magnetic fields.

Suitably, the first section is formed as an elongated bar.

Preferably, the weighing device is formed as an elongated body (integral element) having an elongated U-shaped cavity being formed of a lower side wall (first section) and an upper side wall (third section) and a short side (second portion) joining the lower side wall and the upper side wall. The lower side wall and the upper side wall each extends from a base portion (first portion) of the elongated body toward the short side. A central portion (second portion) having a free end extends from the base portion in a direction toward the short side having its free end facing the short side. Suitably, the elongated body extends in the second direction.

Preferably, the weighing device is U-shaped.

Preferably, the first section and the second section form an integral element.

Suitably, the first section is made of magnetically conductive material within the area of the first section plane, wherein the first end surface of the magnetically conductive core faces the first section plane of the first section.

Preferably, the second section is made magnetically conductive within the area of the second section plane, wherein the first end surface of the magnetically conductive core faces the second section plane of the second section.

Preferably, the direction of the prolongation of the magnetically conductive core corresponds with the first direction.

Preferably, the inductive distance measuring sensor and electronic circuits for measuring the object are fully or in part encompassed within the integral element.

Suitably, the integral element comprises stainless steel, According to the invention, the inductive distance measuring sensor is configured to function according to the reluctance principle.

Preferably, the inductive distance measuring sensor comprises a magnetic field measuring unit configured to regulate an electrical current to a first coil of the magnetically conductive core for maintaining the magnetic field to zero and configured to generate an electrical output signal being representative of the distance to be measured.

Suitably, the first coil is positioned between the first section plane (alternatively the second section plane) and the second coil.

Preferably, the magnetic field measuring unit comprises a magneto resistive sensor.

Suitably, the first coil is positioned around the magnetically conductive core and near the first end surface of the magnetically conductive core.

Preferably, a second coil of the magnetically conductive core is coupled to the magnetic field measuring unit for feeding a reference current to the second coil.

Suitably, a first coil of the magnetically conductive core is coupled to the magnetic field measuring unit for regulating current to the first coil.

Preferably, a third section extends from the first portion to the second portion in the second direction, the first and third section being arranged adjacent the inductive distance measuring sensor.

Suitably, the inductive distance measuring sensor is formed elongated (and extends from a first end corresponding with the first end surface to an opposite second end of the inductive distance measuring sensor) and extends in the first direction and the first and third section each being formed elongated extending in the second direction.

In such way is achieved a gap between the first section plane of the first section and the first end surface of the magnetically conductive core at the same time as the opposite second end of the inductive distance measuring sensor will function as a stop member stopping the third section and thereby the integral element to deflect over a certain degree thus avoiding fraction of the integral element.

Suitably, the first direction is perpendicular or approximately perpendicular to the second direction.

Preferably, the platform is a refuse collection vehicle or lorry or other object and the element comprises a refuse bin or loading device or other object to be weighed.

Preferably, the magnetically conductive core is of a material highly magnetically conductive.

Suitably, the magnetically conductive core is positioned within a cylinder.

Preferably, the magnetically conductive core and the cylinder are interconnected at a bottom section of the cylinder.

Suitably, the first and second coil being disposed about the magnetically conductive core.

Preferably, the first coil is coupled to a first current generator and the second coil is coupled to a second current generator.

Suitably, a magnetic field measuring unit for measuring DC magnetic fields is disposed between the first and second coil.

Preferably, the magnetic field measuring unit is configured to detect the magnetic flux between the first and second coil.

Suitably, the magnetic field measuring unit is coupled to the first current generator via a zero detector.

Preferably, the zero detector is configured to response to the detection of the magnetic flux between the first and second coil for adjusting the current flow through the first coil until no magnetic flux is detected between the first and second coil.

Suitably, the first and second coil are caused to work in opposite directions in a balanced manner resulting in that the resulting magnetic flux through the magnetic field measuring unit all the time is kept equal to zero.

According to the invention, when the width of the gap changes due to deflection of the first section, also the reluctance fed from the first coil will change, wherein a magnetic flux is generated through the magnetic field measuring unit.

Suitably, the magnetic field measuring unit comprises a magneto resistive sensor.

Preferably, a reference indicator is coupled to the second current generator.

Suitably, a measuring instrument is coupled to the respective first and second current generator.

According to the invention, the magnetic field measuring unit reacts to the magnetic flux and directs, via the zero detector, the first current generator which changes it's current to the first coil so that the resulting magnetic flux through the magnetic field measuring unit again becomes equal to zero.

Suitably, an output signal is obtained by measuring the difference between the currents supplied to the first coil and the second coil respectively and is fed to a converting unit coupled to the inductive distance measuring sensor for converting the measured distance to mass and weight of the object being weighed.

Preferably, the measuring instrument is configured to measure the difference in current flow from the respective first and second current generator for providing an output signal.

Suitably, the converting unit, coupled to the inductive distance measuring sensor, is also configured to compensate the indicated weight in regard to actual moments affecting the object to be weighed. Preferably, the first section is configured to be flexible so that the load of the object to be weighed will deflect the first section, whereas the distance of the width defining the gap - between the first end surface of the magnetically conductive core and the first section plane of the first section - will increase in said first direction. The distance is detectable by the inductive distance measuring sensor. A converting unit is coupled to the inductive distance measuring sensor for converting said distance to a mass measure.

Suitably, the object affected by gravity will thus cause a bending moment to the first section and/or a second section and/or a third section.

Preferably, the width of the gap will vary in dependency of the magnitude of the bending moment.

### BRIEF DESCRIPTION OF THE DRAWINGS

The present invention will now be described by way of examples with references to the accompanying schematic drawings, of which:
Fig. 1 illustrates a refuse collection vehicle using a weighing device according to a first example;
Fig. 2 illustrates a weighing device according to a second example;
Figs. 3a-3b illustrate a weighing device according to a third example;
Fig. 4 illustrates a weighing device according to a fourth example; and
Fig. 5 illustrates a weighing device according to a fifth example.

### DETAILED DESCRIPTION

Hereinafter, exemplary embodiments of the present invention will be described with reference to the accompanying drawings, wherein for the sake of clarity and understanding of the invention some details of no importance may be deleted from the drawings.

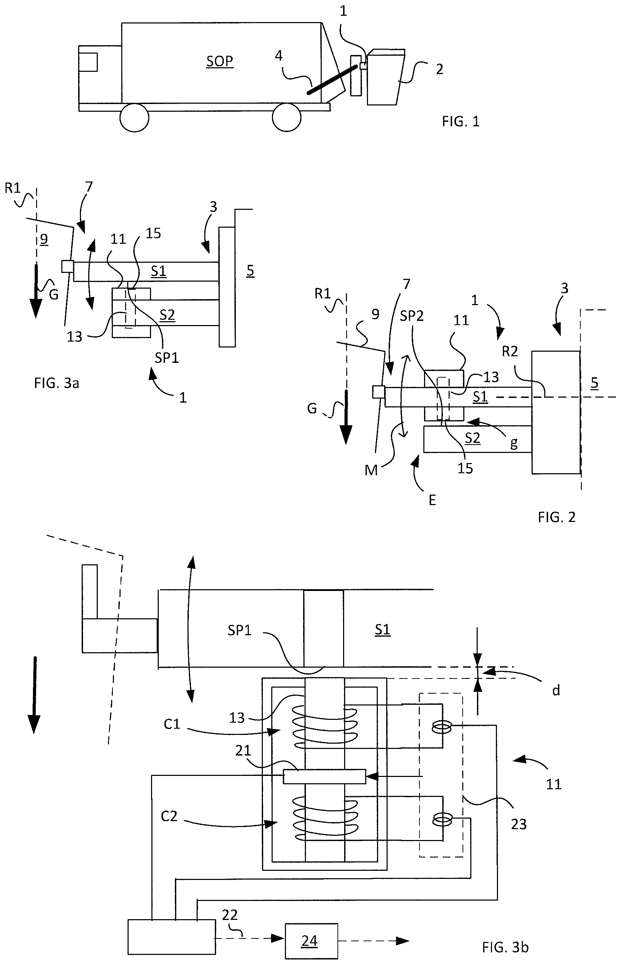

Fig. 1 illustrates a refuse collection vehicle SOP using a weighing device 1 according to a first example. A refuse bin 2 is hanged to a lift arm 4 of the refuse collection vehicle SOP. The weighing device 1 is mounted to the lift arm 4 and is positioned between the refuse bin 2 and the lift arm 4.

When an operator (not shown) hangs the refuse bin 2 to the lift arm 4, the weighing device 1 will weigh the refuse bin 2 and data regarding the weight of the collected refuse for each individual refuse bin is fed to a central register data base (not shown).

Fig. 2 illustrates a weighing device 1 according to a second example. The weighing device 1 comprises a first portion 3 configured to be mounted on a platform 5 (such as a refuse collection vehicle) and comprises a second portion 7 configured to be coupled to an object 9 (such as a refuse bin) to be weighed. The object 9 is affected by gravity G in a first direction R1 during use of the weighing device 1. A first section S1 extends from the first portion 3 to the second portion 7 in a second direction R2.

A second section S2 extends from the first portion 3 to a free end E. An inductive distance measuring sensor 11 is mounted to the first section S1 and comprises a magnetically conductive core 13 having a first end surface 15. The first end surface 15 of the magnetically conductive core 13 faces a second section plane SP2 of the second section S2. The second section S2 is made magnetic within the area of the second section plane SP2. The first section S1 is flexible and the second section S2 being rigid.

The object 9 affected by gravity G will thus cause a bending moment M to the first section S1. A gap g is provided between the first end surface 15 of the magnetically conductive core 13 and the second section plane SP2. The gap g exhibits a width which is variable in said first direction R1 and which corresponds with a distance to be measured by the inductive distance measuring sensor 11. The width of the gap g will vary in dependency of the magnitude of the bending moment M. The inductive distance measuring sensor 11 comprises a magnetic field measuring unit (not shown) configured to regulate an electrical current to a first coil (not shown) of the magnetically conductive core 13 for maintaining the magnetic field to zero and configured to generate an electrical output signal being representative of said distance to be measured.

Figs. 3a-3b illustrate a weighing device according to a third example. Fig. 3a shows a weighing device 1 having a first section S1 and a second section S2. An inductive distance measuring sensor 11 is mounted to the second section S2 and comprises a magnetically conductive core 13 having a first end surface 15. The first end surface 15 of the magnetically conductive core 13 faces a first section plane SP1 of the first section S1. The first section S1 is made magnetic within the area of the first section plane SP1. The weighing device 1 comprises a first portion 3 configured to be mounted on a platform 5 (such as a refuse collection vehicle) and comprises a second portion 7 configured to be coupled to an object 9 (such as a refuse bin) to be weighed. The object 9 is affected by gravity G in a first direction R1 during use of the weighing device 1. The first and second sections S1, S2 are formed as elongated bars. Fig. 3b shows the inductive distance measuring sensor 11 in detail. The inductive distance measuring sensor 11 comprises a magnetic field measuring unit 21 configured to regulate an electrical current to a first coil C1 of the magnetically conductive core 13 for maintaining the magnetic field to zero and configured to generate an electrical output signal 22 being representative of the distance d to be measured. A converting unit 24 is coupled to the inductive distance measuring sensor 11 for converting said distance d to a mass and present weight of the refuse bin. The magnetic field measuring unit 21 comprises a magneto resistive sensor 23. The first coil C1 is positioned between the first section plane SP1 and a second coil C2. The inductive distance measuring sensor 11 is configured to function according to the reluctance principle. The second coil C2 of the magnetically conductive core 13 is coupled to the magnetic field measuring unit 21 for feeding a reference current to the second coil C2.

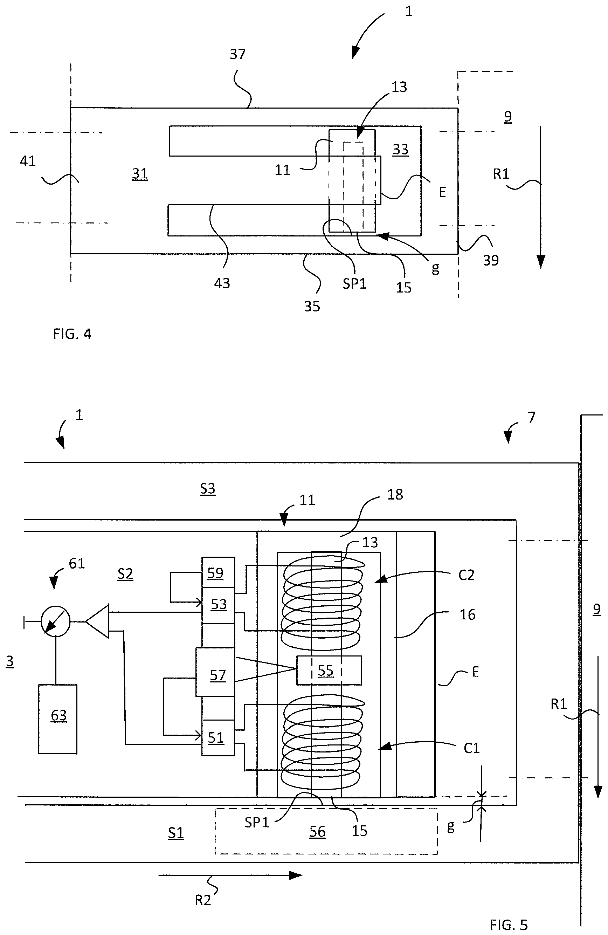

Fig. 4 illustrates a weighing device 1 according to a fourth example. The weighing device 1 is formed as an elongated body 31 (integral element) having an elongated U-shaped cavity 33 being formed of a lower side wall 35 (first section) and an upper side wall 37 (third section) and a short side 39 (second portion) joining the lower side wall 35 and the upper side wall 37. The lower side wall 35 and the upper side wall 37 each extends from a base portion 41 (first portion) of the elongated body 31 toward the short side 39. A central portion 43 (second portion) having a free end E extends from the base portion 41 in a direction toward the short side 39, wherein the free end E faces the short side 39. An inductive distance measuring sensor 11 is mounted to the central portion 43, wherein a first end surface 15 of a magnetically conductive core 13 of the inductive distance measuring sensor 11 faces a first section plane SP1 of the lower side wall 35.

The lower side wall 35 and the upper side wall 37 are configured to be flexible so that the load of the object to be weighed (coupled to the short side 39) will deflect the lower side wall 35 and the upper side wall 37, whereas the distance of the width defining the gap g between the first end surface 15 of the magnetically conductive core 13 and the first section plane SP1 will increase in said first direction R1. The distance (or width) of the gap g is detectable by the inductive distance measuring sensor 11. A converting unit (not shown) is coupled to the inductive distance measuring sensor 11 for converting the distance to a mass and weight of the object 9 to be weighed.

Fig. 5 shows a weighing device 1 with a circuit layout. A first portion 3 is configured to be mounted on a platform (not shown) and a second portion 7 is configured to be coupled to an object 9 to be weighed. The object 9 is affected by gravity in a first direction R1 during use of the weighing device 1. A first section S1 extends from the first portion 3 to the second portion 7 in a second direction R2. The first direction R1 is perpendicular or approximately perpendicular to the second direction R2. A second section S2 extends from the first portion 3 to a free end E. A third section S3 extends parallel with the first section S1 and ends at the second portion 7. The weighing device 1 further comprises an inductive distance measuring sensor 11 comprising a magnetically conductive core 13 having a first end surface 15. Preferably, the direction of the prolongation of the magnetically conductive core corresponds with the first direction R1. The magnetically conductive core 13 is of a material highly permeable to magnetic action. The magnetically conductive core 13 is positioned within a cylinder 16, which also is made of highly permeable material. The magnetically conductive core 13 and the cylinder 16 are interconnected at a bottom section 18 of the cylinder 16. A first C1 and second coil C2 being disposed about the magnetically conductive core 13. The first coil C1 is coupled to a first current generator 51 and the second coil C2 is coupled to a second current generator 53. A magnetic field measuring unit 55 for measuring DC magnetic fields is disposed between the first C1 and second coil C2. The magnetic field measuring unit 55 is coupled to the first current generator 51 via a zero detector 57. A reference indicator 59 is coupled to the second current generator 53. A measuring instrument 61 is coupled to the respective first 51 and second 53 current generator. The first C1 and second C2 coil are caused to work in opposite directions in a balanced manner resulting in that the resulting magnetic flux through the magnetic field measuring unit 55 all the time is kept equal to zero. A gap g is provided between the first end surface 15 of the magnetically conductive core 13 and a first section plane SP1 of the first section S1. The first section S1 is made magnetic within the area of the first section plane SP1 by the arrangement of a permanent magnet 56. The gap g exhibits a width which is variable in said first direction R1 and which corresponds with a distance to be measured by the inductive distance measuring sensor 11. When the width of the gap g changes due to deflection of the first section S1 (and in this case also by the deflection of the third section S3), also the reluctance fed from the first coil C1 will change, wherein a magnetic flux is generated through the magnetic field measuring unit 55. The magnetic field measuring unit 55 reacts to the magnetic flux and directs, via the zero detector 57, the first current generator 51 which in turn changes its current to the first coil C1 so that the resulting magnetic flux through the magnetic field measuring unit 55 again becomes equal to zero. An output signal (not shown) is obtained by measuring the difference between the currents supplied to the first coil C1 and the second coil C2 respectively and is fed to a converting unit 63 coupled to the inductive distance measuring sensor 11 for converting the measured distance to a mass and weight of the object 9 to be weighed.

## Claims

1. A weighing device (1) having a first portion (3) configured to be mounted on a platform (5) and having a second portion (7) configured to be coupled to an object (9) to be weighed, which object (9) is affected by gravity (G) in a first direction (R1) during use of the weighing device (1), the weighing device (1) comprises;
- a first section (S1) extending from the first portion (3) to the second portion (7) in a second direction (R2);
- a second section (S2) extending from the first portion (3) to a free end (E);
- an inductive distance measuring sensor (11) comprising a magnetically conductive core (13) having a first end surface (15);
- the inductive distance measuring sensor (11) is mounted to the first section (S1), wherein the first end surface (15) of the magnetically conductive core (13) faces a second section plane (SP2) of the second section (S2), or is mounted to the second section (S2), wherein the first end surface (15) of the magnetically conductive core (13) faces a first section plane (SP1) of the first section (S1);
- the first section (S1) being flexible and the second section (S2) being rigid;
- a gap (g) is provided between the first end surface (15) of the magnetically conductive core (13) and the second section plane (SP2) or between the first end surface (15) of the magnetically conductive core (13) and the first section plane (SP1);
- the gap (g) exhibits a width which is variable in said first direction (R1) and which corresponds with a distance (d) to be measured by the inductive distance measuring sensor (11); **characterized in that**
- the inductive distance measuring sensor (11) comprises a magnetic field measuring unit (21) configured to regulate an electrical current to a first coil (C1) of the magnetically conductive core (13) for maintaining a magnetic field to zero and configured to generate an electrical output signal being representative of the distance (d) to be measured;
- the inductive distance measuring sensor (11) measures the reluctance by means of DC magnetic fields; wherein the inductive distance measuring sensor (11) is configured to function according to the reluctance principle; and wherein when the width of the gap (g) changes due to deflection of the first section (S1), also the reluctance fed from the first coil will change, wherein a magnetic flux is generated through the magnetic field measuring unit.

2. The weighing device (1) according to claim 1, wherein the first section (S1) is formed as an elongated bar.

3. The weighing device (1) according to claim 1 or 2, **wherein** the first section (S1) and the second section (S2) form an integral element.

4. The weighing device (1) according to any of claims 1 to 3, **wherein** the first section (S1) is made magnetic within the area of the first section plane (SP1).

5. The weighing device (1) according to any of the preceding claims, **wherein** a second coil (C2) of the magnetically conductive core (13) is coupled to the magnetic field measuring unit (21, 55) for feeding a reference current to the second coil (C2).

6. The weighing device (1) according to any of the preceding claims, **wherein** a converting unit (24, 63) is coupled to the inductive distance measuring sensor (11) and is configured to convert the measured distance (d) to mass and weight of the object (9) to be weighed.

7. The weighing device (1) according to any of the preceding claims, **wherein** a third section (37, S3) extends from the first portion (3) to the second portion (7) in the second direction (R2), the first and third section (S1, S3) being arranged adjacent the inductive distance measuring sensor (11).

8. The weighing device (1) according to any of the preceding claims, **wherein** the first direction (R1) is perpendicular or approximately perpendicular to the second direction (R2).

9. The weighing device (1) according to any of the preceding claims, **wherein** the platform (5) is a refuse collection vehicle (SOP) or lorry or other platform and the object comprises a refuse bin (2) or loading device or other object to be weighed.

## Patentansprüche

1. Wiegevorrichtung (1) mit einem ersten Teil (3), der ausgelegt ist, um auf einer Plattform (5) montiert zu werden, und mit einem zweiten Teil (7), der ausgelegt ist, um mit einem zu wiegenden Objekt (9) gekoppelt zu werden, welches Objekt (9) während der Verwendung der Wiegevorrichtung (1) durch Schwerkraft (G) in einer ersten Richtung (R1) beeinflusst wird, welche Wiegevorrichtung (1) umfasst;
- einen sich in einer zweiten Richtung (R2) vom ersten Teil (3) zum zweiten Teil (7) erstreckenden ersten Abschnitt (S1);
- einen sich vom ersten Teil (3) zu einem freien Ende (E) erstreckenden zweiten Abschnitt (S2);
- einen induktiven Abstandsmesssensor (11) umfassend einen magnetisch leitfähigen Kern (13) mit einer ersten Endfläche (15);
- der induktive Abstandsmesssensor (11) an dem ersten Abschnitt (S1) montiert ist, wobei die erste Endfläche (15) des magnetisch leitfähigen Kerns (13) einer zweiten Schnittebene (SP2) des zweiten Abschnitts (S2) zugewandt ist, oder an dem zweiten Abschnitt (S2) montiert ist, wobei die erste Endfläche (15) des magnetisch leitfähigen Kerns (13) einer ersten Schnittebene (SP1) des ersten Abschnitts (S1) zugewandt ist;
- der erste Abschnitt (S1) flexibel ist und der zweite Abschnitt (S2) starr ist;
- ein Spalt (g) zwischen der ersten Endfläche (15) des magnetisch leitfähigen Kerns (13) und der zweiten Schnittebene (SP2) oder zwischen der ersten Endfläche (15) des magnetisch leitfähigen Kerns (13) und der ersten Schnittebene (SP1) vorgesehen ist;
- der Spalt (g) eine Breite aufweist, die in der ersten Richtung (R1) veränderlich ist und die einem vom induktiven Abstandsmesssensor (11) zu messenden Abstand (d) entspricht; **dadurch gekennzeichnet, dass**
- der induktive Abstandsmesssensor (11) eine Magnetfeldmesseinheit (21) umfasst, die ausgelegt ist, um einen elektrischen Strom zu einer ersten Spule (C1) des magnetisch leitfähigen Kerns (13) zur Aufrechterhaltung eines Magnetfelds auf null zu regeln, und ausgelegt ist, um ein elektrisches Ausgangssignal, das den zu messenden Abstand (d) darstellt, zu erzeugen;
- der induktive Abstandsmesssensor (11) mit Hilfe von Gleichstrom-Magnetfeldern die Reluktanz misst; wobei der induktive Abstandsmesssensor (11) ausgelegt ist, um nach dem Reluktanzprinzip zu arbeiten; und wobei sich auch die Reluktanz, die von der ersten Spule zugeführt wird, ändert, wenn sich die Breite des Spaltes (g) wegen Auslenkung des ersten Abschnitts (S1) ändert, wobei ein Magnetfluss durch die Magnetfeldmesseinheit erzeugt wird.

2. Wiegevorrichtung (1) nach Anspruch 1, wobei der erste Abschnitt (S1) als ein länglicher Stab ausgebildet ist.

3. Wiegevorrichtung (1) nach Anspruch 1 oder 2, wobei der erste Abschnitt (S1) und der zweite Abschnitt (S2) ein integrales Element bilden.

4. Wiegevorrichtung (1) nach einem der Ansprüche 1 bis 3, wobei der erste Abschnitt (S1) im Bereich der ersten Schnittebene (SP1) magnetisch gemacht ist.

5. Wiegevorrichtung (1) nach einem der vorhergehenden Ansprüche, wobei eine zweite Spule (C2) des magnetisch leitfähigen Kerns (13) mit der Magnetfeldmesseinheit (21, 55) gekoppelt ist, um der zweiten Spule (C2) einen Referenzstrom zuzuführen.

6. Wiegevorrichtung (1) nach einem der vorhergehenden Ansprüche, wobei eine Umwandlungseinheit (24, 63) mit dem induktiven Abstandsmesssensor (11) gekoppelt ist und ausgelegt ist, um den gemessenen Abstand (d) in Masse und Gewicht des zu wiegenden Objekts (9) umzuwandeln.

7. Wiegevorrichtung (1) nach einem der vorhergehenden Ansprüche, wobei sich ein dritter Abschnitt (37, S3) vom ersten Teil (3) zum zweiten Teil (7) in der zweiten Richtung (R2) erstreckt, wobei der erste und dritte Abschnitt (S1, S3) benachbart zum induktiven Abstandsmesssensor (11) angeordnet sind.

8. Wiegevorrichtung (1) nach einem der vorhergehenden Ansprüche, wobei die erste Richtung (R1) senkrecht oder annähernd senkrecht zur zweiten Richtung (R2) verläuft.

9. Wiegevorrichtung (1) nach einem der vorhergehenden Ansprüche, wobei die Plattform (5) ein Müllsammelfahrzeug (SOP) oder Lastwagen oder eine andere Plattform ist und das Objekt einen Müllbehälter (2) oder eine Ladevorrichtung oder ein anderes zu wiegendes Objekt umfasst.

## Revendications

1. Dispositif de pesage (1) ayant une première partie (3) configurée pour être montée sur une plate-forme (5) et ayant une seconde partie (7) configurée pour être couplée à un objet (9) à peser, lequel objet (9) est affecté par la gravité (G) dans une première direction (R1) lors de l'utilisation du dispositif de pesage (1), le dispositif de pesage (1) comprend ;
- un premier tronçon (S1) s'étendant de la première partie (3) à la seconde partie (7) dans une seconde direction (R2) ;
- un second tronçon (S2) s'étendant de la première partie (3) à une extrémité libre (E) ;
- un capteur de mesure de distance inductif (11) comprenant un noyau magnétiquement conducteur (13) ayant une première surface d'extrémité (15) ;
- le capteur de mesure de distance inductif (11) est monté sur le premier tronçon (S1), dans lequel la première surface d'extrémité (15) du noyau magnétiquement conducteur (13) fait face à un deuxième plan de tronçon (SP2) du second tronçon (S2), ou est monté sur le second tronçon (S2), dans lequel la première surface d'extrémité (15) du noyau magnétiquement conducteur (13) fait face à un premier plan de tronçon (SP1) du premier tronçon (S1) ;
- le premier tronçon (S1) étant flexible et le second tronçon (S2) étant rigide
- un espace (g) est prévu entre la première surface d'extrémité (15) du noyau magnétiquement conducteur (13) et le deuxième plan de tronçon (SP2) ou entre la première surface d'extrémité (15) du noyau magnétiquement conducteur (13) et le premier plan de tronçon (SP1) ;
- l'espace (g) présente une largeur qui est variable dans ladite première direction (R1) et qui correspond à une distance à mesurer par le capteur inductif de mesure de distance (11) ; **caractérisé en ce que**
- le capteur de mesure de distance inductif (11) comprend une unité de mesure de champ magnétique (21) configurée pour réguler un courant électrique vers une première bobine (C1) du noyau magnétiquement conducteur (13) pour maintenir un champ magnétique à zéro et configuré pour générer un signal de sortie électrique représentatif de la distance (d) à mesurer ;
- le capteur de mesure de distance inductif (11) mesure la réluctance au moyen de champs magnétiques CC ; le capteur de mesure de distance inductif (11) étant configuré pour fonctionner selon le principe de réluctance ; et lorsque la largeur de l'espace (g) change en raison de la déviation du premier tronçon (S1), également la réluctance fournie par la première bobine change, un flux magnétique étant généré à travers l'unité de mesure de champ magnétique.

2. Dispositif de pesage (1) selon la revendication 1, dans lequel le premier tronçon (S1) est formé comme une barre allongée.

3. Dispositif de pesage (1) selon la revendication 1 ou 2, dans lequel le premier tronçon (S1) et le second tronçon (S2) forment un élément solidaire.

4. Dispositif de pesage (1) selon l'une quelconque des revendications 1 à 3, dans lequel le premier tronçon (S1) est rendue magnétique dans la zone du premier plan de tronçon (SP1).

5. Dispositif de pesage (1) selon l'une quelconque des revendications précédentes, dans lequel une seconde bobine (C2) du noyau magnétiquement conducteur (13) est couplée à l'unité de mesure de champ magnétique (21, 55) pour fournir un courant de référence à la seconde bobine (C2).

6. Dispositif de pesage (1) selon l'une quelconque des revendications précédentes, dans lequel une unité de conversion (24, 63) est couplée au capteur de mesure de distance inductif (11) et est configurée pour convertir la distance mesurée (d) en masse et poids de l'objet (9) à peser.

7. Dispositif de pesage (1) selon l'une quelconque des revendications précédentes, dans lequel un troisième tronçon (37, S3) s'étend de la première partie (3) à la deuxième partie (7) dans la deuxième direction (R2), les premier et troisième tronçons (S1, S3) étant agencés de manière adjacente au capteur de mesure de distance inductif (11).

8. Dispositif de pesage (1) selon l'une quelconque des revendications précédentes, dans lequel la première direction (R1) est perpendiculaire ou approximativement perpendiculaire à la deuxième direction (R2).

9. Dispositif de pesage (1) selon l'une quelconque des revendications précédentes, dans lequel la plate-forme (5) est un véhicule de collecte des ordures (SOP) ou un camion ou une autre plate-forme et l'objet comprend une poubelle (2) ou un dispositif de chargement ou un autre objet à peser.
